# FASCICULE DE BREVET EUROPEEN

(11) **EP 0 523 156 B1**
(45) Date de publication et mention de la délivrance du brevet: **29.12.1993**
(21) Numéro de dépôt: 91907745.3
(22) Date de dépôt: 28.03.1991
(51) Int. Cl.: B26F 1/00, B26F 1/14

(54) **BLOC PORTE-POINCONS ET PROCEDE DE MONTAGE DE POINCONS SUR LEDIT BLOC**
STANZSTEMPELHALTEBLOCK UND MONTAGEVERFAHREN DER STEMPEL IM GENANNTEN BLOCK
PUNCH-HOLDER BLOCK AND PROCESS FOR MOUNTING PUNCHES ON SAID BLOCK

(30) Priorité: 02.04.1990 FR 9004484
(43) Date de publication de la demande: 20.01.1993
(73) Titulaire: KODAK-PATHE, F-75594 Paris Cedex 12 (FR); EASTMAN KODAK COMPANY, Rochester, New York 14650-2201 (US)
(72) Inventeur: LONG, Michael, F-71102 Chalon-sur-Saône Cédex (FR)
(74) Mandataire: Parent, Yves
(86) Numéro de dépôt international: FR9100245
(87) Numéro de publication internationale: WO9115343

(56) Documents cités:
- DE-A- 3 605 363
- US-A- 1 379 396
- US-A- 2 220 523
- US-A- 4 583 631
- US-A- 4 671 553

## Description

L'invention concerne un bloc porte-poinçons ainsi qu'un procédé de montage des poinçons sur ledit bloc.

Les films photographiques, par exemple, portent, parallèlement à leurs bords, une ou deux rangées de perforations permettant l'entraînement du film dans les appareils de prise de vues, de projection et dans les machines de traitement. Dans l'utilisation de films photographiques, on sait que la qualité de la projection, notamment la stabilité, des images sur l'écran, dépend étroitement de la qualité des perforations, c'est-à-dire de la constance de leur pas et de la précision d'exécution de chaque perforation. A cet égard, les tolérances requises sont extrêmement faibles, de l'ordre de quelques microns seulement sur la perforation finie.

La précision d'exécution des perforations dépend de la précision du mouvement des poinçons lors de la perforation mais dépend également de la précision du montage desdits poinçons.

Dans les perforatrices du type à mouvement alternatif, les poinçons sont généralement montés sur un bloc d'épaisseur appropriée. Le bloc est fixé sur la machoire supérieure du dispositif de perforation et disposé de manière à ce que les poinçons viennent coopérer périodiquement avec une matrice portée par la machoire inférieure du dispositif de perforation.

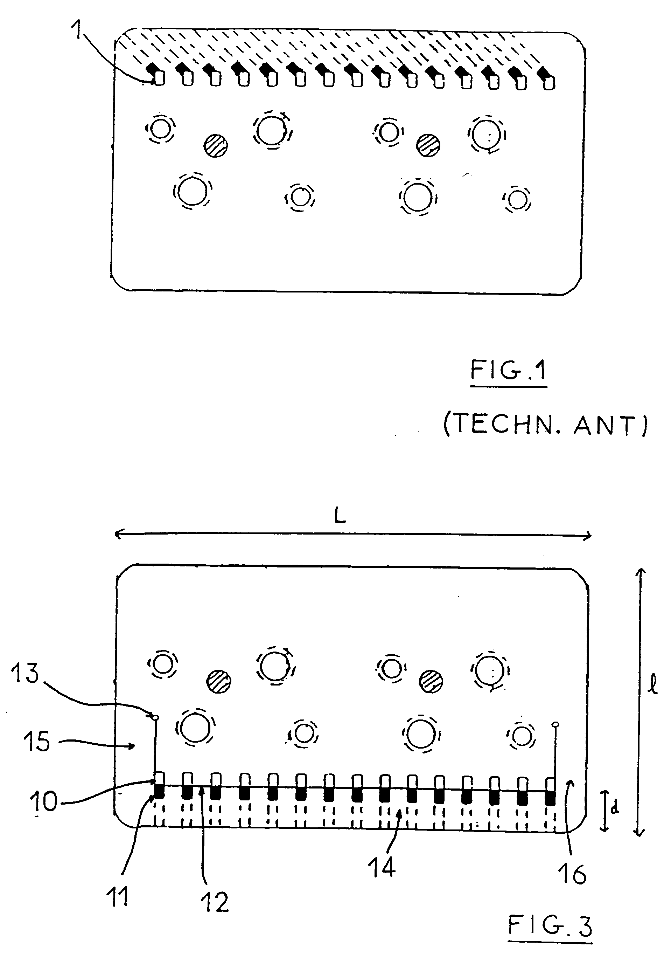

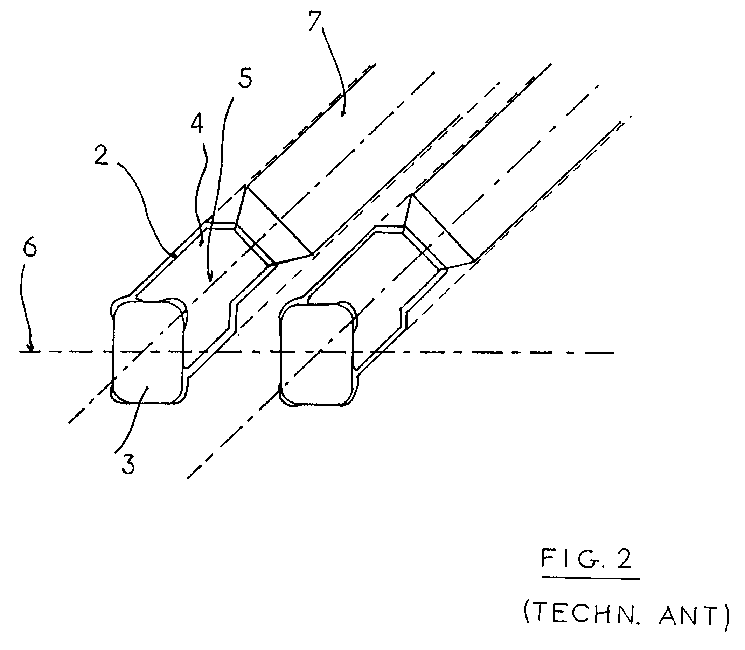

La Fig. 1 représente un bloc porte-poinçons sur lequel les poinçons sont montés tels que dans la technique antérieure.

Le bloc représenté comporte une rangée constituée de 15 poinçons (1). La disposition de ces poinçons est représentée de façon plus détaillée à la Fig. 2. Le poinçon est logé dans un évidement (2) de taille et de forme appropriées pour recevoir d'une part le poinçon (3) et d'autre part une cale de positionnement (4) disposée de manière à appuyer sur deux faces adjacentes dudit poinçon.

La cale est disposée de manière à ce que son axe (5) réalise un angle d'environ 45° par rapport à l'axe d'alignement (6) des poinçons. L'évidement se prolonge selon l'axe de la cale de positionnement de manière à recevoir une vis (7) destinée à appuyer sur ladite cale (4), réalisant ainsi un blocage du poinçon à la fois selon l'axe d'alignement desdits poinçons et selon l'axe perpendiculaire audit axe d'alignement. Selon cette technique, le positionnement des poinçons est ajusté de manière individuelle. Les inconvénients d'une telle technique sont principalement les suivants :
- lorsque l'une des vis associée à l'un des poinçons se desserre, le poinçon n'est plus maintenu en position,
- une telle disposition des cales de positionnement implique que les vis associées à deux poinçons adjacents soient relativement rapprochées entre elles et peut empêcher l'utilisation de vis de taille suffisante pour réaliser le serrage nécessaire,
- la forme des évidements destinés à recevoir les poinçons et les cales de positionnement est relativement complexe à réaliser et implique des temps de réalisation assez importants.

Le brevet US 2 220 523 décrit quant à lui un dispositif de positionnement de deux poinçons disposés en regard l'un de l'autre de chaque côté d'un film à perforer. Le maintien des poinçons dans le bloc porte-poinçons est assuré individuellement pour chaque poinçon au moyen d'une vis. On retrouve dans un tel dispositif le même type de problèmes que ceux décrits précédemment en référence au dispositif de la Fig. 1.

Aussi est-ce un des objets de la présente invention que de réaliser un bloc porte-poinçons ainsi qu'un procédé de montage de poinçons sur un bloc porte-poinçons plus simples et plus économiques que ceux de la technique antérieure.

C'est un autre objet de la présente invention que de permettre un positionnement plus fiable des poinçons sur un bloc porte-poinçons.

D'autres objets de la présente invention apparaîtront au cours de la description plus détaillée qui suit.

Les objectifs de la présente invention sont atteints en fournissant un bloc porte-poinçons comportant au moins une rangée d'au moins deux poinçons (10, 22) maintenus dans des évidements prévus dans ledit bloc, grâce à des moyens de serrage appropriés (14, 24), caractérisé en ce que
- le maintien des poinçons sur ledit bloc porte-poinçons est réalisé au moyen d'une étroite rainure (20) traversant l'épaisseur du bloc porte-poinçons, ladite rainure reliant lesdits évidements entre eux et s'étendant sur toute la longueur de la rangée de poinçons en se prolongeant en chacune de ses extrémités, perpendiculairement à l'axe d'alignement desdits poinçons, de manière à définir une poutre longitudinale (14) et deux portions de poutres transversales (15, 16), lesdits poinçons étant disposés du côté de la rainure opposé à la poutre longitudinale, ladite rainure étant disposée de telle sorte qu'une déformation de la poutre longitudinale (14) par lesdits moyens de serrage (14, 24) provoque un rapprochement relatif desdites portions de poutres transversales (15, 16) de façon à réaliser le serrage desdits poinçons.

Selon la présente invention, on réalise également un procédé de montage de poinçons disposés en rangées comprenant au moins deux poinçons maintenus dans des évidements prévus dans ledit bloc, grâce à des moyens de serrage appropriés (14, 24), dans lequel on bloque les poinçons sur ledit bloc porte-poinçons au moyen d'une étroite rainure (20) traversant l'épaisseur du bloc porte-poinçons, ladite rainure reliant lesdits évidements entre eux et s'étendant sur toute la longueur de la rangée de poinçons en se prolongeant, en chacune de ses extrémités, perpendiculairement à l'axe d'alignement desdits poinçons de manière à définir une poutre longitudinale (14) et deux portions de poutres transversales (15, 16), lesdits poinçons étant disposés du côté de la rainure opposé à la poutre longitudinale, ledit blocage étant réalisé en appliquant, grâce auxdits moyens de serrage (14, 24), une déformation à ladite poutre longitudinale (14), laquelle déformation provoque un rapprochement relatif desdites portions de poutres transversales (15, 16).
La description détaillée qui suit fait référence aux dessins dans lesquels :
- la Fig. 1 représente un bloc porte-poinçons sur lequel les poinçons sont montés tels que dans la technique antérieure ;
- la Fig. 2 représente de façon plus détaillée la disposition des poinçons sur le bloc porte-poinçons de la Fig. 1 ;
- la Fig. 3 représente un bloc porte-poinçons sur lequel les poinçons sont montés selon la présente invention ;
- la Fig. 4 représente de façon plus détaillée la disposition des poinçons sur le bloc porte-poinçons de la Fig. 3.

Dans le mode de réalisation de la Fig. 3, le bloc porte-poinçons comporte une rangée constituée de 15 poinçons (10) espacés selon un pas uniforme. Il est évident que l'invention n'est pas limitée à un tel nombre de poinçons et concerne de manière générale tout dispositif de perforation comportant de préférence au moins deux poinçons. Le bloc porte-poinçons comporte pour chaque poinçon un évidement de forme sensiblement rectangulaire de manière à recevoir d'une part le poinçon et d'autre part, selon un mode de réalisation possible, une cale de positionnement (11) disposée perpendiculairement à l'axe d'alignement des poinçons. Selon la présente invention on réalise une étroite rainure (12) s'étendant sur sensiblement toute la longueur de la rangée de poinçons et traversant chacun des évidements. Selon un mode de réalisation, ladite rainure traverse chacun des évidements, approximativement en leur milieu. Ladite rainure traverse le bloc porte-poinçons sur toute son épaisseur. La rainure longitudinale se prolonge en chacune de ses extrémités, perpendiculairement à l'axe d'alignement desdits poinçons. Chacun des prolongements se termine, selon un mode de réalisation préférentiel, par un évidement (13) sensiblement circulaire de façon à ne pas trop affaiblir la pièce en ces points. Une telle disposition permet de définir ainsi une poutre longitudinale (14) et deux portions de poutres transversales (15, 16).

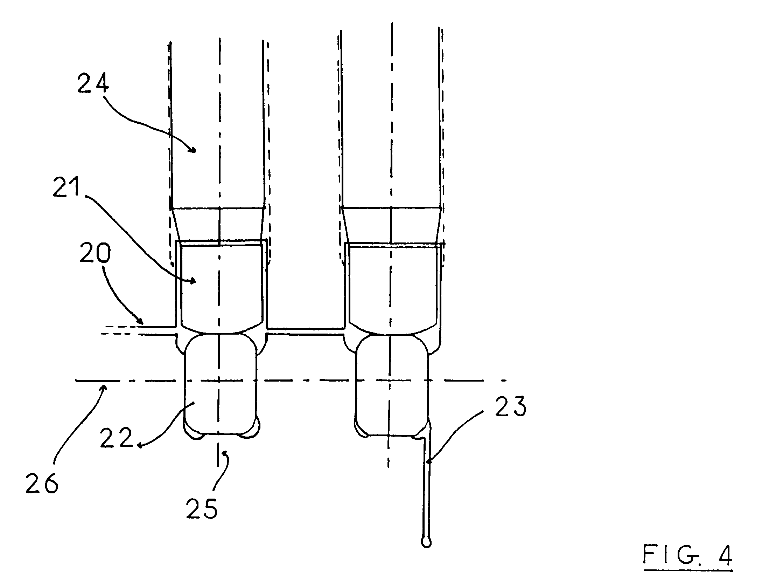

Une vue plus détaillée de la disposition des poinçons est représentée en Fig. 4. Ainsi que représentée en Fig. 4, la rainure longitudinale (20) est réalisée sensiblement au niveau de l'interface entre les cales de positionnement (21) et les poinçons (22). De même, on note dans la Fig. 4 que les poinçons d'extrémité de la rangée ne sont pas distants des portions transversales (23) de la rainure ; au contraire l'évidement destiné à recevoir les poinçons d'extrémités se trouve dans le prolongement de la rainure de sorte que lesdits poinçons d'extrémité soient en appui direct sur les poutres transversales respectives. Une telle disposition présente l'avantage de réduire les contraintes subies par le bloc porte-poinçons.

Contrairement à la technique antérieure, où la cale de positionnement définissait un angle d'environ 45° par rapport à l'axe d'alignement des poinçons et où ladite cale était conçue de manière à appuyer sur deux des faces du poinçon, selon la présente invention, la cale de positionnement (21) est placée dans le prolongement dudit poinçon et n'appuie donc que sur une seule face du poinçon. Une vis (24) placée dans le prolongement de la cale de positionnement presse ladite cale (21) contre le poinçon (22) de manière à le bloquer en translation selon l'axe (25) perpendiculaire à l'axe d'alignement des poinçons. Les vis assurent également un blocage desdits poinçons selon leur propre direction longitudinale, c'est-à-dire selon l'axe du mouvement du bloc porte-poinçons lorsqu'il est monté sur un dispositif de perforations. Selon un mode de réalisation, on associe de la même manière une vis à chaque poinçon. Ainsi lorsque la force résultant du serrage desdites vis est suffisante, celle-ci a pour conséquence de provoquer une déformation (dans ce cas, un cintrage) de la poutre longitudinale (14 ; Fig. 3), laquelle déformation permet de rapprocher entre elles les portions de poutres transversales (15, 16 ; Fig. 3), réalisant ainsi le blocage des poinçons selon l'axe d'alignement (26) desdits poinçons. Une telle disposition permet de réaliser un serrage uniforme des poinçons sur toute la rangée, et, dans le cas où l'une (ou plusieurs) des vis associée à l'un (ou à plusieurs) des poinçons se desserrerait, ledit (ou lesdits) poinçon resterait maintenu en position du fait de la force exercée par les vis restantes. La déformation de ladite poutre longitudinale (14) peut être obtenue par d'autres moyens similaires. Il peut s'agir en effet d'une ou plusieurs vis (de diamètre plus important que celles utilisées dans le mode de réalisation précédent) disposées en un ou plusieurs endroits de la poutre longitudinale.

Il est évident que ladite rainure ne doit pas être disposée trop près du bord du bloc et de même ne doit pas en être disposée trop loin afin d'obtenir des poutres suffisamment flexibles mais pas trop, de manière à permettre un serrage correct desdits poinçons. De préférence cette rainure est réalisée à une distance comprise entre 5 mm et 10 mm du bord, mais cette distance dépend bien sur de la longueur de ladite poutre longitudinale et du matériau utilisé. Une telle disposition réalise ainsi un blocage complet dans l'espace desdits poinçons à l'intérieur du bloc.

Dans un mode de réalisation préférentiel, on remplit ladite rainure d'un matériau souple et déformable tel que du silicone afin de pouvoir maintenir en position les cales de positionnement lorsque l'on enlève lesdits poinçons.

Cette rainure est, à titre d'exemple, réalisée par électro-érosion et, de préférence, est aussi étroite que possible.

A titre d'exemple, des valeurs numériques utilisables dans un tel dispositif sont les suivantes :
- dimensions du bloc porte-poinçons : L = 8 cm ; l = 4,5 cm ; h = 12 mm,
- nombre de poinçons : 15
- distance entre la rainure et le bord du bloc : d = 7 mm
- largeur de la rainure : 1/4 mm
- force exercée par les vis perpendiculairement à l'axe d'alignement des poinçons : 120 N
- force de serrage exercée par les portions de poutres transversales : 3 000 N
- déformation au centre de la poutre longitudinale : 1,3 mm
- diamètre des vis : 2,8 mm
- matériau utilisé : acier dur.

Dans le mode de réalisation de la Fig. 3, le bloc porte-poinçons comporte une seule rangée de poinçons mais il est évident qu'un tel bloc pourrait comporter une seconde rangée de poinçons sur le côté opposé dudit bloc.

Selon un mode de réalisation préférentiel, non représenté, on supprime les cales de positionnement de telle sorte que les vis appuient directement sur les poinçons. Une telle disposition facilite le montage desdits poinçons sur un tel bloc.

## Revendications

1. Bloc porte-poinçons comportant au moins une rangée d'au moins deux poinçons (10, 22) maintenus dans des évidements prévus dans ledit bloc, grâce à des moyens de serrage appropriés (14, 24), caractérisé en ce que :
- le maintien des poinçons sur ledit bloc porte-poinçons est réalisé au moyen d'une étroite rainure (20) traversant l'épaisseur du bloc porte-poinçons, ladite rainure reliant lesdits évidements entre eux et s'étendant sur toute la longueur de la rangée de poinçons en se prolongeant en chacune de ses extrémités, perpendiculairement à l'axe d'alignement desdits poinçons, de manière à définir une poutre longitudinale (14) et deux portions de poutres transversales (15, 16), lesdits poinçons étant disposés du côté de la rainure opposé à la poutre longitudinale (14), ladite rainure étant disposée de telle sorte qu'une déformation de la poutre longitudinale (14) par lesdits moyens de serrage (14, 24) provoque un rapprochement relatif desdites portions de poutres transversales (15, 16) de façon à réaliser le serrage desdits poinçons.

2. Bloc porte-poinçons selon la revendication 1, caractérisé en ce qu'il comprend en plus des moyens (24) assurant le positionnement des poinçons selon la direction perpendiculaire à l'axe d'alignement desdits poinçons.

3. Bloc porte-poinçons selon la revendication 2, caractérisé en ce que lesdits moyens de positionnement des poinçons comprennent une vis (24) associée à chaque poinçon.

4. Bloc porte-poinçons selon l'une quelconque des revendications 1 à 3 caractérisé en ce qu'il comprend deux rangées de poinçons comprenant chacune quinze poinçons.

5. Bloc porte-poinçons selon l'une quelconque des revendications 1 à 4, caractérisé en ce que ladite étroite rainure (20) est réalisée par électro-érosion.

6. Bloc porte-poinçons selon la revendication 3, caractérisé en ce que les moyens de serrage appropriés sont constitués desdites vis (24) associées auxdits poinçons.

7. Bloc porte-poinçons selon l'une quelconque des revendications 1 à 6, caractérisé en ce que les poinçons d'extrémités des rangées de poinçons appuient directement sur les poutres transversales.

8. Bloc porte-poinçons selon la revendication 3 ainsi que toutes celles qui en dépendent, caractérisé en ce que lesdites vis appuient directement sur lesdits poinçons.

9. Bloc porte-poinçons selon la revendication 3 ainsi que toutes celles qui en dépendent, caractérisé en ce que lesdites vis appuient sur lesdits poinçons par l'intermédiaire d'une cale de positionnement.

10. Bloc porte-poinçons selon l'une quelconque des revendications 1 à 9, caractérisé en ce que ladite étroite rainure est remplie d'un matériau souple et déformable tel que du silicone.

11. Procédé de montage de poinçons disposés en rangées comprenant au moins deux poinçons maintenus dans des évidements prévus dans ledit bloc, grâce à des moyens de serrage appropriés (14, 24), dans lequel on bloque les poinçons sur ledit bloc porte-poinçons au moyen d'une étroite rainure (20) traversant l'épaisseur du bloc porte-poinçons, ladite rainure reliant lesdits évidements entre eux et s'étendant sur toute la longueur de la rangée de poinçons en se prolongeant, en chacune de ses extrémités, perpendiculairement à l'axe d'alignement desdits poinçons de manière à définir une poutre longitudinale (14) et deux portions de poutres transversales (15, 16), lesdits poinçons étant disposés du côté de la rainure opposé à la poutre longitudinale, ledit blocage étant réalisé en appliquant, grâce auxdits moyens de serrage (14, 24), une déformation à ladite poutre longitudinale (14), laquelle déformation provoque un rapprochement relatif desdites portions de poutres transversales (15, 16).

12. Procédé de montage de poinçons selon la revendication 11, caractérisé en ce que l'on positionne lesdits poinçons (10, 22) selon la direction perpendiculaire à l'axe d'alignement (26) desdits poinçons au moyen d'une vis associée à chacun des poinçons de ladite rangée.

13. Procédé selon la revendication 12, dans lequel lesdits moyens de serrage appropriés sont constitués desdites vis associées auxdits poinçons.

## Patentansprüche

1. Stanzblock-Tragarm mit mindestens einer Reihe aus mindestens zwei Stanzen (10, 22), die in an dem Block vorgesehenen Aussparungen durch Arretiermittel (14, 24) gehaltert sind, dadurch gekennzeichnet, daß die Stanzen in den Stanzblock durch einen über die gesamte Dicke des Blocks verlaufenden schmalen Schlitz gehalten werden, wobei der Schlitz die einzelnen Aussparungen untereinander verbindet und sich entlang der gesamten Länge der Stanzenanordnung erstreckt und an deren Endabschnitten senkrecht zur Ausrichtachse der Stanzen verläuft, so daß eine Längsschiene (14) und zwei Abschnitte von Querschienen (15, 16) gebildet werden, und wobei die Stanzen auf der Seite des Schlitzes gegenüber der Längsschiene liegen, und der Schlitz so angeordnet ist, daß eine durch die Arretiermittel (14, 24) hervorgerufene Verformung der Längsschiene (14) die Abschnitte der Querschienen einander annähert, wodurch die Stanzen arretiert werden.

2. Stanzblock-Tragarm nach Anspruch 1, dadurch gekennzeichnet, daß er Mittel für die Positionierung der Stanzen entlang der zur Ausrichtachse der Stanzen senkrechten Richtung aufweist.

3. Stanzblock-Tragarm nach Anspruch 2, dadurch gekennzeichnet, daß die Positioniermittel der Stanzen eine jeder Stanze zugeordnete Schraube (24) aufweisen.

4. Stanzblock-Tragarm nach einem der Ansprüche 1 bis 3, dadurch gekennzeichnet, daß er zwei Stanzreihen mit je fünfzehn Stanzen aufweist.

5. Stanzblock-Tragarm nach einem der Ansprüche 1 bis 4, dadurch gekennzeichnet, daß der schmale Schlitz (20) durch Elektro-Erosion erzeugt wird.

6. Stanzblock-Tragarm nach Anspruch 3, dadurch gekennzeichnet, daß die Verformung der Längsschiene (14) durch Anziehen der den Stanzen zugeordneten Schrauben (24) erfolgt.

7. Stanzblock-Tragarm nach einem der Ansprüche 1 bis 6, dadurch gekennzeichnet, daß die Stanzen an den jeweiligen Enden der Stanzreihen unmittelbar auf die Querschienen drücken.

8. Stanzblock-Tragarm nach Anspruch 3 sowie allen auf Anspruch 3 rückbezogenen Ansprüchen, dadurch gekennzeichnet, daß die Schrauben unmittelbar auf die Stanzen drücken.

9. Stanzblock-Tragarm nach Anspruch 3 sowie allen auf Anspruch 3 rückbezogenen Ansprüchen, dadurch gekennzeichnet, daß die Schrauben unter Zwischenschaltung eines Positionierkeils auf die Stanzen drücken.

10. Stanzblock-Tragarm nach einem der Ansprüche 1 bis 9, dadurch gekennzeichnet, daß der schmale Schlitz mit elastisch verformbarem Material, z. B. Silikon, gefüllt ist.

11. Verfahren zur reihenweisen Befestigung von Stanzen, wobei die Stanzen mittels eines quer über die gesamte Dicke des Blocks verlaufenden schmalen Schlitzes (20) arretiert werden und mindestens zwei Stanzen in an dem Block vorgesehenen Aussparungen mittels geeigneter Arretiermittel (14, 24) gehaltert sind, wobei der Schlitz die einzelnen Aussparungen untereinander verbindet und sich entlang der gesamten Länge der Stanzenanordnung erstreckt und an deren Endabschnitten senkrecht zur Ausrichtachse der Stanzen verläuft, um eine Längsschiene (14) und zwei Abschnitte von Querschienen (15, 16) zu bilden, und wobei die Stanzen auf der Seite der Längsschiene liegen und die Arretierung derselben durch eine an der Längsschiene hervorgerufene Verformung erfolgt, welche die Abschnitte der Querschienen (15, 16) einander annähert.

12. Verfahren zur Befestigung von Stanzen nach Anspruch 11, dadurch gekennzeichnet, daß die Stanzen (10, 22) entlang der zur Ausrichtachse (26) der Stanzen senkrechten Richtung durch eine jeder Stanze einer Reihe zugeordnete Schraube positioniert werden.

13. Verfahren nach Anspruch 12, dadurch gekennzeichnet, daß die Verformung der Längsschiene (14) durch Anziehen der den Stanzen zugeordneten Schrauben erfolgt.

## Claims

1. Punch block support arm comprising at least one array of at least two punches (10, 22)held in recesses provided in said block by means of immobilizing means (14, 24), characterized in that :
- the holding of the punches on said punch block is realized by means of a narrow slot across the whole block thickness, said slot connecting to each other said recesses and extending along the entire length of the punch array and extending at each of its ends, perpendicular to the alignment axis of said punches, so as to define a longitudinal bar (14) and two portions of transversal bars (15, 16) said punches being located on the side of the slot opposite to the longitudinal bar, said slot being located so that a distorsion of the longitudinal bar (14) produced by said immobilizing means (14, 24) brings relatively closer said portions of transversal bars so as to immobilize said punches.

2. Punch block support arm according to claim 1 characterized in that it further comprises means for positioning said punches along the direction perpendicular to the alignment axis of said punches.

3. Punch black support arm according to claim 2 characterized in that said positioning means of said punches comprise a screw (24) associated with each punch.

4. Punch block support arm according to any of claims 1 to 3 characterized in that it comprises two arrays of punches, each comprising fifteen punches.

5. Punch block support arm according to any of claims 1 to 4, characterized in that said narrow slot (20) is achieved by electro-erosion.

6. Punch block support arm according to claim 3, characterised in that the distortion of said longitudinal bar (14) is achieved by tightening said screws (24) associated with said punches.

7. Punch block support arm according to any one of claims 1 to 6, characterized in that the end punches of the punch arrays press directly on the transversal bars.

8. Punch block support arm according to claim 3 as well as all the claims depending on claim 3, characterized in that said screws press directly on said punches.

9. Punch block support arm according to claim 3 as well as all the claims depending on claim 3, characterized in that said screws press on said punches through the intermediary of a positionipositioning wedge.

10. Punch block support arm according to any one of claims 1 to 9, characterized in that said narrow slot is filled with a flexible material which can be distorted, such as silicone.

11. Process for mounting punches arranged in arrays comprising at least two punches held in recesses provided in said block, by means of appropriate immobilizing means (14, 24), and in which the punches are immobilized by means of a narrow slot (20) across the whole block thickness, said slot connecting to each other said recesses and extending on the whole length of said punch array ; and extending at each of its ends, perpendicular to the alignment axis of said punches, in order to define a longitudinal bar (14) and two portions of transversal bars (15, 16), said punches being located on the side of the slot opposite to the longitudinal bar, said immobilizing of the punches being realized by a distorsion produced on said longitudinal bar, which distorsion brings relatively closer said portions of transversal bars (15, 16).

12. Process for mounting punches according to claim 11 characterized in that said punches (10, 22) are positionned along the direction perpendicular to the alignment axis (26) of said punches by means of a screw associated with each of the punches on said array.

13. Process according to claim 12, in which the distortion of said longitudinal bar (14) is achieved by tightening said screws associated with said punches.
